# EUROPÄISCHE PATENTANMELDUNG

(11) **EP 0 952 720 A2**
(43) Veröffentlichungstag der Anmeldung: **27.10.1999**
(21) Anmeldenummer: 99105243.2
(22) Anmeldetag: 13.03.1999
(51) Int. Cl.: H04M 1/03, H04M 1/15

(54) **Fernsprechhandapparat**

(30) Priorität: 16.04.1998 DE 19816769
(71) Anmelder: DeTeWe - Deutsche Telephonwerke Aktiengesellschaft & Co., 10997 Berlin (DE)
(72) Erfinder: Jankowsky, Florian, 10589 Berlin (DE); Krebs, Kolja, 12051 Berlin (DE); Morlok, Walter, 12307 Berlin (DE)

(57) **Zusammenfassung**

Für einen zweischaligen Fernsprechhandapparat zur automatischen Montage, der der Aufnahme der akustischen Wandler und deren Verkabelung dient und der mittels einer Handapparateschnur mit der Fernsprechstation verbunden ist, wird vorgeschlagen, das Mikrofon (2), die Buchse (1) zur Aufnahme eines Steckers der Handapparateschnur und den Verteiler (4) zum Anschluß einer Hörkapsel (5) auf einer gemeinsamen Leiterplatte (3) anzuordnen.

## Beschreibung

Die Erfindung bezieht sich auf einen zweischaligen Fernsprechhandapparat für eine automatische Montage, der der Aufnahme der akustischen Wandler und deren Verkabelung dient und mittels einer Handapparateschnur mit der Fernsprechstation verbunden ist.

Handapparate von Telekommunikations-Endgeräten sind vorzugsweise aus zwei Gehäuseschalen zusammengesetzt, die die akustischen Wandler aufnehmen. Um die Wandler lagesicher und akustisch dicht im Handapparat zu befestigen, werden Halter verwendet, die durch entsprechende Konturen und Verschrauben der Gehäuseschalen die Wandler in ihrer Lage fixieren.

Die Gehäusehälften sind allgemein durch Rast- und Schraubelemente lösbar miteinander verbunden. Dabei ist auf einen dichten Abschluß der Trennfuge und einer Verwindungsfestigkeit zwischen beiden Gehäusehälften zu achten.

Beim Zusammenbau, besonders bei einer automatischen Fertigung sind die Verbindung von Handapparateschnur mit dem Mikrofon relativ arbeitsaufwendig. Insbesondere die Verwendung sogenannter Pin-Type-Mikrofone, kleine Elektret- oder Kondensatormikrofone mit Pin-Anschlüssen, erschwert den Fertigungsprozeß, wobei das Löten an Mikrofonen aufgrund der thermischen Lötbelastung problematisch ist und zu Einbußen an der Empfindlichkeit der Mikrofone führen kann.

Aufgabe der vorliegenden Erfindung war es, für eine automatische Fertigung eine sichere und kostengünstige Lösung für die Verbindung des Mikrofons mit der Handapparateschnur eines Fernsprechhandapparates anzugeben.

Diese Aufgabe ist durch die Erfindung gelöst, wie sie im Kennzeichnungsteil des ersten Patentanspruches dargelegt ist. Weitere vorteilhafte Maßnahmen sind Gegenstand der Unteransprüche.

Anhand einer Zeichnung, die perspektivisch die untere Gehäuseschale eines Fernsprechhandapparates mit eingesetzten akustischen Wandlern zeigt, wird die Erfindung nachfolgend näher beschrieben.

Für den Anschluß der Handapparateschnur an einen Fernsprechhandapparat wird eine Buchse 1 verwendet. Diese Buchse 1 ist zusammen mit dem Mikrofon 2 auf einer Leiterplatte 3 angeordnet. Zusätzlich zur Buchse 1 und Mikrofon 2 ist ein Verteiler 4 vorgesehen, der die Hörkapsel 5 über Drähte 6 anschließt.

Anstelle der Drahtverbindungen 6 zur Hörkapsel 5 kann auch die Leiterplatte 3 derart ausgebildet sein, daß die Hörkapsel 5 wie das Mikrofon 2 und die Buchse 1 direkt angelötet wird.

Die Leiterplatte 3 wird in die untere Gehäuseschale 7 gesetzt und mittels Rasthalterungen befestigt. Dabei ist konstruktiv darauf zu achten, daß die Buchse 1 möglichst spielfrei im Handapparat angeordnet ist, um eine Übertragung von Körperschall von der Handapparateschnur zum Mikrofon 2 minimal zu halten. Da Buchse 1, Mikrofon 2 und Verteiler 4 in Richtung der Schallaustrittsöffnung für das Mikrofon 2 montiert werden, ist einer einseitigen Leiterbahnanordnung auf der Leiterplatte 3 der Vorzug zu geben.

Außerdem können bei entsprechender Ausbildung weitere Bauelemente auf der Leiterplatte 3 montiert werden, wie z.B. Drosseln, Kondensatoren, Schutzschaltungen oder Analog-Digital-Wandler usw.

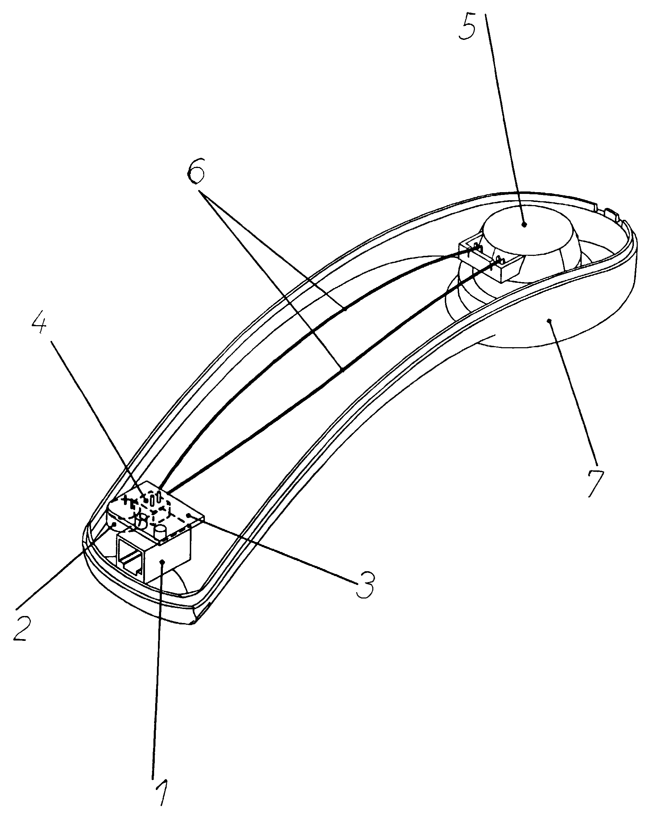

## Patentansprüche

1. Zweischaliger Fernsprechhandapparat für eine automatische Montage, der der Aufnahme der akustischen Wandler und deren Verkabelung dient und der mittels einer Handapparateschnur mit der Fernsprechstation verbunden ist, dadurch gekennzeichnet, daß ein Mikrofon (2), eine Buchse (1) zur Aufnahme eines Steckers der Handapparateschnur und ein Verteiler (4) zum Anschluß einer Hörkapsel (5) auf einer gemeinsamen Leiterplatte (3) angeordnet sind.

2. Zweischaliger Fernsprechhandapparat nach Anspruch 1, dadurch gekennzeichnet, daß die Leiterplatte (3) so ausgebildet ist, daß sie zusätzlich eine Hörkapsel (5) trägt.

3. Zweischaliger Fernsprechhandapparat nach Anspruch 1 und 2, dadurch gekennzeichnet, daß die Leiterplatte (3) derart in der unteren Gehäuseschale (7) montiert ist, daß die Buchse (1) spielfrei im Handapparat angeordnet ist.
